Europäisches Patentamt

European Patent Office

Office européen des brevets

(11) Publication number: **0 396 296**
**A1**

# EUROPEAN PATENT APPLICATION

(21) Application number: **90304345.3**

(51) Int. Cl.⁵: **D04H 1/48**

(22) Date of filing: **23.04.90**

(30) Priority: **05.05.89 GB 8910362**

(43) Date of publication of application:
**07.11.90 Bulletin 90/45**

(84) Designated Contracting States:
**BE CH DE FR GB IT LI**

(71) Applicant: **BRITISH UNITED SHOE MACHINERY LIMITED**
**PO Box 88 Ross Walk**
**Belgrave Leicester LE4 5BX(GB)**

(72) Inventor: **Symcox, Robert Owen**
**11 Cross Hedge, Rothley**
**Leicestershire(GB)**
Inventor: **Moore, Philip Richard**
**147 Barclay Street**
**Leicester LE3 0HJ(GB)**
Inventor: **Downie, Malcolm James**
**32 The Romans Mountsorrel**
**Loughborough Leicestershire LE3 OHJ(GB)**

(74) Representative: **Atkinson, Eric**
**c/o British United Shoe Machinery Limited**
**P.O. Box 88 Ross Walk**
**Belgrave Leicester LE4 5BX(GB)**

(54) Insole material.

(57) An improved insole material comprises a mechanically bonded non-woven substrate and a surface layer which comprises hot-pressed thermally bonded fine fibre, which is a synthetic fibre having a gauge of less than 1.7 decitex.

The insole material is preferably manufactured by laying a surface layer comprising a fleece which is a blend of a fine fibre with a fusible fibre on top of a second fleece layer and needling the two layers together in such a way that substantially none of the coarser fleece fabric fibres are caused to protrude through the surface layer while ensuring that the base is sufficiently well needled to give the necessary high laminar strength. The needled material is heated in a heated press to a temperature above the melting point of the fusible fibre, and the material is then impregnated and dried.

## INSOLE MATERIAL

The present invention relates to insole material more particularly to a non-woven insole material which has improved surface characteristics.

Non-woven insole materials are known which have desirable physical properties such as stiffness, stitch-tear resistance and split-tear resistance (resistance to delamination), but in general such insole materials are not available with aesthetically attractive surface characteristics. In particular, while it is desirable for insole materials to have a generally smooth and dense surface appearance, non-woven insole materials typically have a more or less hairy surface.

It is also known to manufacture insole materials from cellulose board. In general, such insole materials do have the desired smooth and dense surface appearance, but have less advantageous physical properties than non-woven insole materials. In particular, the laminar strength of cellulose board is poor due to its layered construction, and the board tends to wear badly, particularly at exposed edges. This is a particular problem in so-called "veldt" constructions for shoes, in which an edge of the insole is exposed in the finished shoe. In contrast to this, non-woven insole materials do not demonstrate this disadvantage.

Many attempts have been made, over a number of years, to provide an insole material in which the advantageous physical properties of a non-woven insole material are combined with the desirable surface characteristics of a cellulose board. For example it has been proposed to provide such materials by laminating or coating a suitable surface onto a non-woven insole material. Such materials have not been successful due to poor bonding between the surface layer and the non-woven base, and also due to poor wear/abrasion resistance of the coating. Moreover with such materials the surface appearance and behavior in wear have not always been equal to that of cellulose. In particular, the surface finishes have shown a tendency to "crack" or "pipe", to soil and to affect the desiried moisture absorption and desorption characteristics during wear.

It is one of the objects of the present invention to provide an improved insole material in which the above disadvantages are reduced or substantially obviated.

It is another of the objects of the present invention to provide a method for the manufacture of insole material whereby the above disadvantages are reduced or substantially obviated.

The present invention provides an insole material comprising a mechanically bonded non-woven substrate and a surface layer which comprises hot-pressed thermally bonded fine fibre (as herein defined).

By the term "fine fiber" where used herein is meant a synthetic fibre having a gauge of less than 1.7 decitex. The fine fibre surface layer can suitably be made thermally bondable by blending the fine fibre with a fusible fibre, preferably a bicomponent fibre, or by incorporating a fusible powder after attachment to the substrate. The fine fibre is preferably fibre having a gauge of less than 1 decitex, e.g. a polyester fibre having a gauge of 0.8 decitex.

One method for the manufacture of an insole material according to the invention comprises forming a ply of a first, surface, layer comprising a fleece which is a blend of a fine fibre (as herein defined) with a fusible fibre, and a second layer comprising a fleece of coarser fibres than those of the surface layer, the two layers being needled together in such a way that substantially none of the fibres of the second layer are caused to protrude through the surface layer while ensuring that the second layer is sufficiently well needled to give the necessary high laminar strength, heating the needled material in a heated press to a temperature above the melting point of the fusible fibre, and thereafter impregnating and drying the material.

Preferably in carrying out said one method, the fusible fibre is a bicomponent fibre. The bicomponent fibre may be any type of bicomponent fibre, for example a sheath/core, side-by-side or crescent type.

In order to reduce the cost of the finished material as far as possible, the surface layer should be as thin and as light as possible, based on the total weight of the material, provided that the layer is sufficiently thick to provide a satisfactory surface finish. The top layer is thus preferably 20 to 30% by weight, more particularly 15 to 25% by weight, and in a preferred embodiment 20% by weight of the finished material.

For ease of handling, it may be preferred that the surface layer is partially needled before it is combined with the second layer. The surface layer can then be useful as a support or carrier. The material may be produced in the form of a laminar batt which is then needled. This method of manufacture tends to result in improved adhesion between the layers.

In carrying out said one method, the surface layer preferably comprises from 30% to 50% by weight of the fusible, preferably bicomponent, fibre and from 70% to 50% by weight of the fine fibre. The specific 5proportions to be used for a particular material depend on the properties required of the final product. In general, the higher the proportion of the fine fibre, the less the resultant material shows evidence of needle tracks, but the hairier the surface. The higher proportion of fusible 10 fibers, the more evident the needle tracks, but the less hairy the surface.

The heated press in which the material is heated after needling may suitably be a platten press where the material is in sheet form, but where the material is in roll form, preferably a densifier or transfer printing press is used in which the material is held with its fine fibre surface layer against a revolving heated drum by a continuous belt, or alternatively a double band press, as described in European Patent Application No. 904,482 may be used. The combined effect of the heat and pressure is believed to be that the fusible fibre is melted, the surface glazes and the loose hairs are tied in. For example, for a bicomponent fibre, in which the lower melting component melts at about 120°C, the material is preferably heated to about 160°C. The material, while at this temperature, is subjected to a pressure of typically 9.24 kilo Pascals (1.34 1bf/sq.in).

After pressing, the material is impregnated using an impregnant based on the known impregnants for insole materials. Typical impregnants for insole materials include filled SBR latices, that is latices of styrene-butadiene-rubber which contain a proportion of inorganic filler. After impregnation, the material is then dried and calendered. In carrying out said one method according to the invention the SBR latex impregnant may optionally be modified by the addition of a thermoplastic latex, for example Vinnol 50 which is a latex of a copolymer consisting of 60% vinyl chloride and 40% vinyl acetate available from Wacker Chemicals, preferably used in a proportion of 0 to 50%, more preferably 10 to 26% by weight of solids, based on the total solids content of the impregnant.

The drying may be carried out in any suitable drying apparatus, in particular one in which the material is maintained substantially flat while it is still wet. Suitably drying ovens include the Spooner oven, in which the material is subjected to the action of jets of heated air while passing through the oven, or an oven in which the material is supported on a conveyor belt during its passage through the oven. In the case of a Spooner oven, the air jets can be adjusted so as to cause minimum deflection from the horizontal of the material. When the wet material is maintained as flat as possible in this way, there is a reduced likelihood of the finished material being creased.

The material may also be subjected to a second hot pressing or hot calendering, but this may not be necessary if the proportions of the fibres in the surface layer have been selected so that the material is sufficiently smooth and non-hairy after the drying stage. In general, a second hot calendering or pressing is only carried out where the impregnant contains a thermoplastic latex, and where a particularly smooth surface is required for a particular application.

Instead of the surface layer comprising a blend of fine fibres with a fusible fibre as described above, fine fibres alone may be used and a fusible powder be incorporated therein. The invention thus further provides a method for the manufacture of an insole material according to the invention which comprises forming a ply of a first, surface, layer, comprising a fine fibre fleece (as herein defined), and a second layer, comprising a fleece of coarser fibre than those of the surface layer, the two layers being needled together in such a way that substantially none of the fibres of the second layer are caused to protrude through the surface layer while ensuring that the second layer is sufficiently well needled to give the necessary high laminar strength, incorporating a fusible powder in the surface layer, heating the needled material in a heated press to a temperature above the melting point of the fusible fibre, and thereafter impregnating and drying the material.

Other features of this further method according to the invention are generally the same as described with reference to said one method.

The physical properties of the materials made in accordance with either of the aforementioned methods, such as the stiffness, stitch-tear resistance and delamination-resistance, are generally as good as those of a standard non-woven insole material and indeed said materials may have improved stitch-tear resistance and laminar strength. Furthermore, said materials have excellent surface characteristics and good abrasion-resistance compared to cellulose.

Said one method for the manufacture of insole material according to the invention will now be further described with reference to the following examples:

## EXAMPLE 1

A batt was produced from a blend of 45% by weight Hoechst T252 bicomponent fibre and 55% by weight EMS Grilon Grilene Type B 0.8 dtex 34 mm staple length polyester. This batt was then needled with Foster 15 x 18 x 40 x 3.5 CB F20 9 - 18 - 3B needles to a needle punch density of 90 punches per square centimetre, 5through each side, at a penetration of 9 mm.

A second batt was produced from a blend of 50% by weight ca. 1.5 dtex second quality polyester and 50% by weight 5 dtex 58 mm staple polyester fibre.

The ratio of weights of the first and second batts was approximately 23:77.

The first batt was laid on top of the second and needled to it, using Foster 15 x 18 x 40 x 3.5 CB F20 9 -18 - 3B needles, to a punch density of 450 per square centimetre at a penetration of 9 mm. The laminate so produced was then similarly needled through the other side, with a penetration of 5 mm.

The completed felt was treated in a densifier at 160° C for 30 seconds, causing the lower melting component of the bicomponent fibre to melt and also serving to smooth the surface, and after cooling was impregnated with a latex blend containing Baystall S30R and S42R (Bayer).

After drying and curing, the impregnated material was cold-calendered to gauge.

The material, possessed a smooth, relatively hair-free surface with no evidence of needle tracks.

EXAMPLE 2

A batt was produced from a blend of 30% by weight Hoechst T252 bicomponent fibre and 70% by weight EMS Grilon Grilene Type B 0.8 dtex 34 mm staple length polyester. This batt was then needled with Foster 15 x 18 x 40 x 3.5 CB F20 9 - 18 - 3B needles to a needle punch density of 90 punches per square centimetre, through each side, at a penetration of 9 mm.

A second batt was produced from a blend of 50% by weight ca. 1.5 dtex second quality polyester and 50% by weight 5 dtex 58 mm staple polyester fibre.

The ratio of weights of the first and second batts was approximately 18:82.

The first batt was laid on top of the second and needled to it, using Foster 15 x 18 x 40 x 3.5 CB F20 9 -18 - 3B needles, to a punch density of 450 per square centimetre at a penetration of 9 mm. The laminate so produced was then similarly needled through the other side, with a penetration of 5 mm.

The completed felt was treated in a densifier at 160° C for 30 seconds, causing the lower melting component of the bicomponent fibre to melt and also serving to smooth the surface, and after cooling was impregnated with a latex blend containing Baystal S30R, S42R and Vinnol 50.

After drying and curing, the impregnated material was hot-calendered at 140° C to finish the surface and achieve the desired gauge.

The material possessed a very smooth, hairless surface with no evidence of needle tracks and a slight glaze.

EXAMPLE 3

A batt was produced from a blend of 45% by weight Hoechst T252 bicomponent fibre and 55% by weight Akzo/Enka T551 1.5 dtex 34 mm staple length polyester. This batt was then needled with Foster 15 x 18 x 40 x 3.5 CB F20 9 - 18 - 3B needles to a needle punch density of 90 punches per square centimetre, through each side, at a penetration of 9 mm.

A second batt was produced from a blend of 50% by weight ca. 1.5 dtex second quality polyester and 50% by weight 5 dtex 58 mm staple polyester fibre.

Then ratio of weights of the first and second batts was approximately 23:77.

The first batt was laid on top of the second and needled to it, using Foster 15 x 18 x 40 x 3.5 CB F20 9 -18 - 3B needles, to punch density of 450 per square centimetre at a penetration of 9 mm. The laminate so produced was then similarly needled through the other sie, with a penetration of 5 mm.

The completed felt was treated in a densifier at 160° C for 30 seconds, causing the lower melting component of the bicomponent fibres to melt and also serving to smooth the surface, and after cooling was impregnated with a latex blend containing Baystal S30R and S42R.

After drying and curing, the impregnated material was cold-calendered to gauge.

The material possessed a reasonably smooth, relatively hair-free surface with no evidence of needle tracks, but with slight discontinuities in the surface. It is nevertheless considered that this material would be adequate for many shoe-making applications while not being as aesthetically desirable as the material described in Example 1.

The second method for the manufacture of an insole material according to the invention will now be further described with reference to the following example:

EXAMPLE 4

A batt was produced from 100% EMS Grilon Grilene Type B 0.8 dtex 34 mm staple length polyester. This batt was then needled with Foster 15 x 18 x 40 x 3.5 CB F20 9 -18 - 3B needles to a needle punch density of 90 punches per square centimetre, through each side, at a penetration of 9 mm.

A second batt was produced from a blend of 50% by weight ca. 1.5 dtex second quality polyester and 50% by weight 5 dtex 58 mm staple polyester fibre.

The ratio of weights of the first and second batts was approximately 23:77.

The first batt was laid on top of the second and needled to it using Foster 15 x 18 x 40 x 3.5 CB F20 9 -18 - 3B needles, to a punch density of 450 per square centimetre at a penetration of 9 mm. The laminate so produced was then similarly needled through the other side, with a penetration of 5 mm.

A powder, comprising a low-melt polyester (of a melting point of 110°C) and having a particle size of !00 to 500 microns, was then scattered uniformly over the surface of the first batt, at a weight of 10grs/sq.metre.

The completed material was then treated in a densifier at 160°C for 30 seconds, causing the powder to melt and thus to bond the fibres in the surface layer together and at the same time serving to smooth the surface. After cooling the material was then impregnated with a latex blend containing Baystal S30R and S42R (Bayer).

After drying and curing, the impregnated material was cold-calendered to gauge.

The material possessed a smooth, relatively hair-free surface with no evidence of needle tracks.

## Claims

1. An insole material comprising a mechanically bonded non-woven substrate and a surface layer which comprises hot-pressed thermally bonded fine fibre (as herein defined).

2. An insole material according to Claim 1 wherein the surface layer comprises a blend of fine fibre with fusible fibre, the fusible fibre having been heated to bond the fine fibres one to the other.

3. An insole material according to Claim 2 wherein the surface layer has been attached to the substrate by a needling operation causing fibres of the surface layer to penetrate into the substrate but substantially without any of the coarser fibres in the substrate protruding at the outer surface of the surface layer.

4. An insole material according to any of Claims 1 to 3 wherein the surface layer comprises from 10 to 30% by weight of the finished material.

5. An insole material according to Claim 4 wherein the surface layer comprises from 15 to 25% by weight of the finished material.

6. An insole material according to Claim 5 wherein the surface layer comprises 20% by weight of the finished material.

7. An insole material according to any one of the preceding claims in which the fine fibre is a polyester fibre having a gauge of 0.8 decitex.

8. A method for the manufacture of an insole material comprising forming a ply of a first, surface, layer comprising a fleece which is a blend of a fine fibre (as herein defined) with a fusible fibre, and a second layer comprising a fleece of coarser fibres than those of the surface layer, the two layers being needled together in such a way that substantially none of the fibres of the second layer are caused to protrude through the surface layer while ensuring that the second layer is sufficiently well needled to give the necessary high laminar strength, heating the needled material in a heated press to a temperature above the melting point of the fusible fibre, and thereafter impregnating and drying the material.

9. A method according to Claim 8 in which the fusible fibre is a bicomponent fibre.

10. A method according to Claim 8 or Claim 9 in which the surface layer comprises from 30% to 50% by weight of the fusible fibre and from 70% to 50% by weight of the fine fibre.

11. A method for the manufacture of an insole material comprising forming a ply of a first, surface, layer comprising a fine fibre fleece (as herein defined), and a second layer comprising a fleece of coarser fibres than those of the surface layer, the two layers being needled together in such a way that substantially none of the fibres of the second fleece layer are caused to protrude through the surface layer while ensuring that the second layer is sufficiently well needled to give the necessary high laminar strength, incorporating a fusible powder in the surface layer, heating the needled material in a heated press to a temperature above the melting point of the fusible fibre, and thereafter impregnating and drying the material.

12. A method according to any one of Claims 8 to 11 wherein one or both of the layers are partially needled prior to the forming of the ply as aforesaid.

13. A method according to any of Claims 8 to 12 wherein the material is impregnated with a latex impregnant.

14. A method according to Claim 13 wherein the latex impregnant is a filled SBR latex to which has been added from 0 to 50% by weight of solids, based on the total solids content of the latex, of a thermoplastic latex.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-46834 (FREUDENBERG) <br> * pages 4 – 7; claim 1 * | 1, 2 | D04H1/48 |
| A | * pages 6 – 7; claim 5 * | 7, 9, 10, 12 | |
| Y | GB-A-1425586 (PORTWAYS) <br> * pages 2 – 3; claims 1, 2, 7, 8, 22 * | 1, 2 | |
| A | GB-A-2161509 (FREUDENBERG) <br> * pages 1 – 2; claims 1, 4, 6 * | 8, 11, 13, 14 | |
| A | GB-A-2035892 (WOOL DEVELOPMENT) <br> * page 1, lines 42 – 63; claims 1, 3, 5, 6 * | 2 | |
| A | GB-A-1530261 (RICHARD NEVILLE) <br> * page 1; claims 1-2 * | 1, 2, 8, 11 | |

TECHNICAL FIELDS SEARCHED (Int. Cl.5)

D04H

The present search report has been drawn up for all claims

| Place of search | Date of completion of the search | Examiner |
|---|---|---|
| THE HAGUE | 13 AUGUST 1990 | DURAND F.C. |

EPO FORM 1503 03.82 (P0401)